(19) Europäisches Patentamt
European Patent Office
Office européen des brevets

(11) **EP 0 827 364 A2**

(12) **EUROPÄISCHE PATENTANMELDUNG**

(43) Veröffentlichungstag:
04.03.1998 Patentblatt 1998/10

(51) Int. Cl.$^6$: **H05B 3/34**, H05B 3/56

(21) Anmeldenummer: 97113173.5

(22) Anmeldetag: 31.07.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 01.08.1996 DE 29613339 U
01.08.1996 DE 29613341 U

(71) Anmelder: **Wilhelm, Friedrich**
**85452 Moosinning (DE)**

(72) Erfinder: **Wilhelm, Friedrich**
**85452 Moosinning (DE)**

(54) **Heizleitung und Heizmatte mit minimiertem Magnetfeld**

(57) Eine Heizleitung weist einen Bereich (6) auf, in dem das durch die Stromführung erzeugte Magnetfeld reduziert ist. Dazu sind in dem Bereich (6) zwei benachbart geführte Heizleiter (1, 1', 5, 5') vorgesehen, die, wenn sie an eine Wechselstromquelle angeschlossen sind, an benachbarten Stellen phasenversetzt durchströmt sind. Vorzugsweise sind die beiden Heizleiter (1, 1', 5, 5') gegenläufig geführt und an dieselbe Wechselstromquelle angeschlossen. Dadurch reduziert sich die richtungs- und zeitabhängige magnetische Induktion auf ein Minimum. Die Reduzierung von magnetfeldern ist insbesondere bei elektrischen Geräten notwendig, die durch Menschen bedient werden, um eine Beeinträchtigung der Gesundheit aufgrund des Magnetgfelds zu vermeiden. Ferner wird ein Stecker für einen erfindungsmäßigen Stromleiter bereit gestellt.

Eine Heizmatte (11), insbesondere zum Beheizen von Flächen, besitzt einen sich erwärmenden Heizleiter (1, 14, 15). Die Heizmatte (11) umfaßt einen Knotenpunkt, an dem die Stromzufuhr auf mindestens zwei sich erwärmende Heizleitungen (1, 14, 15) aufgeteilt ist, so daß die Heizleitungen (1, 14, 15) paarweise in der Heizmatte (11) geführt werden können. Durch die paarweise Anordnung der Heizleitungen (1, 14, 15) werden die sich aufbauenden Magnetfelder in der Umgebung der Heizmatte (11) abgeschwächt. Die Heizmatte (11) kann in Boden- oder Wandheizungen oder in Heizdecken eingesetzt werden.

Fig. 8

## Beschreibung

Die Erfindung betrifft eine Heizleitung nach dem Oberbegriff des Anspruchs 1 und eine Heizmatte nach dem Oberbegriff des Anspruchs 16 zur Beheizung von Flächen mit minimiertem Magnetfeld und Elektrowechselfeld. Solche Heizmatten werden gewöhnlich als Flächenheizungen beim Bau von Gebäuden eingesetzt, in denen sie sowohl als Fußbodenheizung als auch als Wandbeheizung, beispielsweise in Bädern, eingesetzt werden.

Begriffsbestimmungen gem. DIN 44576 Teil 1, Seite 3 Ziff. 2.28.1 f. vom März 1987:

Heizleiter:     Heizleiter ist der leitfähige Teil einer Heizleitung, in dem unmittelbar elektrische Energie in Wärme umgewandelt wird.

Heizleitung:    Heizleitung ist ein (oder mehrere zusammengefaßte) isolierter Heileiter.

Heizelement:    Heizelement besteht aus Heizleitung oder Flächenheizleitung und gegebenenfalls den damit fest verbundenen Kaltleitungen, die diese mit der Anschlußstelle der Elektroinstallation verbinden.

Heizmatte:      Heizmatte besteht aus einem oder mehreren Heizelementen, welche(s) vom Hersteller durch entsprechende Vorrichtungen geometrisch fixiert ist bzw. sind.

Es ist bekannt, daß in der Umgebung von stromdurchflossenen Leitungen Magnetfelder aufgebaut werden. Zur Bestimmung der Größe des Magnetfeldes wird die magnetische Feldstärke H als Quotient aus magnetischer Kraft und dem Produkt aus der Ladung q und der Geschwindigkeit v definiert. Die Größe der magnetischen Feldstärke hängt dabei von der Stromstärke I im Leiter ab. Ferner wird bei einer Wechselspannung eine magnetische Induktion erzeugt, die von der Spannungsänderung abhängig ist. Dabei ist die magnetische Induktion zur Feldstärke proportional.

Die magnetische Feldstärke an einem geraden Leiter ist entlang einer kreisförmigen Feldlinie konstant. Die Feldstärke H außerhalb des stromdurchflossenen geraden Leiters läßt sich mit der Stromstärke I und dem Abstand vom Leiter in einer zum Leiter senkrechten Ebene R wie folgt ermitteln:

$$H = I/2\pi R$$

Als Maß fur die Stärke eines magnetischen Feldes kann man die Feldstärke H und damit den sie erzeugenden Strom I sehen oder man betrachtet die Induktionswirkung eines sich ändernden Magnetfeldes. Den je Fläche A und Windung N induzierten Spannungsstoß bezeichnet man als magnetische Induktion B:

$$B = \int Udt/(NA) \; [\text{Tesla (T)}]$$

Die magnetische Induktion B und die Feldstärke H sind dabei einander proportional.

Bei einem Wechselstromkreis induziert der Wechselfluß nach dem Induktionsgesetz eine Selbstinduktionsspannung, die in dem Moment ihren Höchstwert hat, in dem sich der Strom und der Fluß am stärksten ändern, also beim Nulldurchgang dieser Größen.

Die Erzeugung von Magnetfeldern ist jedoch unerwünscht, da nach dem derzeitigen Stand der Wissenschaft nicht ausgeschlossen werden kann, daß die elektrischen oder magnetischen Felder in der Umgebung eines Menschen schädigende Einflüsse auf dessen Organismus haben können. Die Weltgesundheitsorganisation hat für Elektroinstallationen daher empfohlen, bei Elektrowechselfeldern unter einem Wert von 5 kV/m und bei elektromagnetischen Feldern unter 100 µT zu bleiben. Im Rahmen von wissenschaftlichen Erkenntnissen von Baubiologen, die sich mit Elektroinstallationen im Gebäudebau beschäftigen, wurden diese Werte als zu hoch eingestuft. Die Baubiologen fordern Werte für elektromagnetische Felder von höchstens 0,2 µT und für Elektrowechselfelder von 50 V/m.

## Heizleitung

Herkömmliche Heizleitungen werden an eine Wechselstromquelle angeschlossen und sind aus Widerstandsmaterial gebildet. Aufgrund des erhöhten Widerstandes erwärmt sich der Heizleiter und kann damit direkt oder indirekt die erforderliche Stelle an dem elektrischen Gerät oder im Belag erhitzen. Die Heizleitung ist dabei auf der einen Seite mit der Phase und auf der anderen Seite mit dem Nulleiter verbunden. Aufgrund der Netzfrequenz und der damit verbundenen Änderung der Spannung wird in der Umgebung des Heizleiters vor allem eine magnetische Induktion erzeugt.

Es ist daher Aufgabe der vorliegenden Erfindung, eine Heizleitung derart auszubilden, daß in der Umgebung der Heizleitung das Magnetfeld reduziert wird. Dabei soll aus Kostengründen auf die für konventionelle Heizleitungen verwendeten Materialien zurückgegriffen werden.

Diese Aufgabe wird mit einer Heizleitung gemäß dem Anspruch 1 gelöst. Wenn die Heizleitung zwei benachbart geführte Heizleiter aufweist, die bei einem Anschluß an eine Wechselstromquelle an benachbarten Stellen phasenversetzt durchströmt sind, überlagert sich das durch die Induktion erzeugte magnetische Feld derart, daß es sich im wesentlichen aufhebt, da das durch die Induktion aufgebaute Feld richtungs- und zeitabhängig ist. Die zwei benachbart geführten Heizleiter werden durch die Phasenverschiebung zumindest teilweise gegenläufig durchströmt, sodaß die Spannungsänderung ebenfalls phasenversetzt erfolgt und die magnetische Induktion der beiden Heizleiter sich zumindest teilweise gegenseitig aufhebt.

Vorzugsweise sind die beiden Leitungen gegenläufig an eine Wechselstromquelle angeschlossen, so daß sie gegenläufig durchströmt werden und sich die magnetische Induktion auf ein Minimum reduziert. Gegenständlich läßt sich die Heizleitung realisieren, wenn ein erster Heizleiter an der einen Seite eines Bereichs an die Phase und an der anderen Seite an den Nulleiter und der zweite Heizleiter an dem Bereich genau umgekehrt an den Nulleiter und die Phase angeschlossen sind, bzw. die beiden Heizleiter an einem Ende miteinander verbunden sind.

In einer vorteilhaften Ausgestaltung der Erfindung sind die Heizleiter mit einer Isolierung versehen, so daß kein Kurzschluß durch einen Kontakt der Heizleiter erzeugt werden kann. Eine umweltfreundliche und umfassende Isolierung läßt sich durch FCKW-freie Kunststoffisoliermaterialien erreichen.

Vorzugsweise sind die beiden isolierten Heizleiter zu einer Heizleitung verdrillt. Um den erhöhten Sicherheitsanforderungen gerecht zu werden und um die elektrischen Wechselfelder zu vermindern, ist diese Heizleitung mit einer Erdungsleitung, dem Schutzleiter, versehen. Eine kompakte Ausgestaltung der Heizleitung sieht vor, daß der Schutzleiter aus einer dichten Umflechtung aus verzinntem Kupfer gebildet ist.

Um die Heizleitung vor einer mechanischen Beanspruchung zu schützen, ist vorzugsweise ein Schutzmantel um die Heizleitung angeordnet.

Wenn die Heizleiter als Widerstandsleiter ohne Isolierung ausgeführt sind, die durch geeignete Vorrichtungen auf Abstand gehalten werden, können sie als spiralförmige oder gerade Widerstandsleiter verwendet werden.

Vorzugsweise sind die Heizleiter als Widerstandslitze, -drähte, -stäbe, -bänder oder -folien, die mit einer Isolierung versehen sind, ausgeführt, sodaß kein Kurzschluß durch einen Kontakt der Stromleitungen erzeugt werden kann.

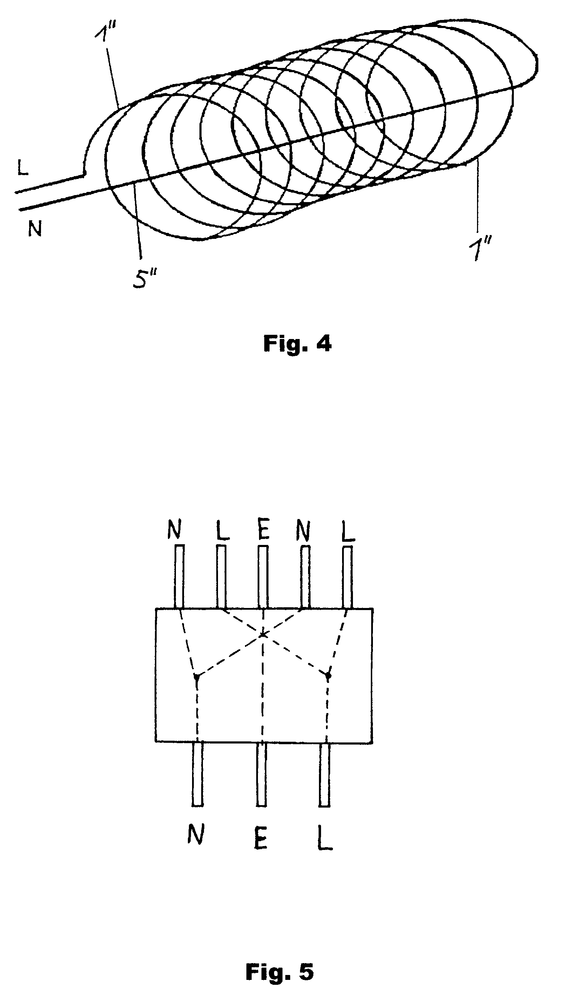

In einer vorteilhaften Ausgestaltung ist ein erster Heizleiter spiralfärmig und beabstandet um einen zweiten Heizleiter geführt, sodaß die Wärmeableitung aufgrund der großen Oberfläche besonders gut ist (Fig. 5).

## Stecker

Ferner wird zur Lösung der Erfindung ein Stecker für eine Heizleitung mit den Merkmalen des Anspruchs 12 bereitgestellt. Wenn der Stecker je zwei Anschlüsse für die Phase und den Nulleiter aufweist, kann auf einfache Weise ein Stromleiter mit seinen erfindungsgemäßen Vorteilen genutzt werden. Dabei kann der Stecker stationär in ein elektrisches Gerät eingebaut werden, sodaß die Heizleitung in einfacher Weise ausgesteckt werden kann.

In einer vorteilhaften Ausgestaltung des Steckers ist aus Sicherheitsgründen ein Anschluß für eine Erdungsleitung vorgesehen.

Um den Stecker mit einer Netzsteckdose verbinden zu können, weist der Stecker einen Phasen-, einen Nulleiter und einen Erdungsleitereingang auf Dabei ist für den Anschluß an eine erfindungsgemäße Heizleitung der Stecker mit zwei Phasen-, zwei Nulleiter- und einem Erdungsleitungsausgang versehen.

## Heizmatte

Bei herkömmlichen Heizmatten ist eine Heizleitung mäanderförmig geführt, durch Vorrichtungen auf Abstand gehalten, an einer Wechselstromquelle angeschlossen. In der Umgebung der Heizleitung bildet sich ein vor allem durch den Wechselstrom erzeugtes Induktionsfeld aus, wobei sich an Stellen, an denen die Heizleitung parallel verläuft, die Induktionswirkung verstärkt. Da die Induktivität eine gerichtete Größe ist, die zur Zeit der Änderung des Stroms am größten ist, verstärkt sich die Induktivität an den benachbarten Leitungen.

Die oben beschriebene herkömmliche Heizmatte ohne Schutzleiter (Erdungsleitung) überschreitet sowohl bei den elektromagnetischen als auch bei den Elektrowechselfeldern diese baubiologischen Grenzwerte er-heblich. Durch die Anordnung eines Schutzleiters um den Heizleiter können die Elektrowechselfeld-Grenzwerte unterschritten werden, ja es werden sogar die im Raum vorhandenen Grundwerte gesenkt. Die elektromagnetischen Felder können jedoch nicht durch die Vorsehung einer Material- schicht in der nötigen Weise vermindert werden.

Es ist daher Aufgabe der Erfindung, eine Heizmatte zu schaffen, in deren Umgebung die elektromagnetischen Felder gesenkt werden, insbesondere die Größe des elektromagnetischen Feldes so niedrig ist, daß eine Gefährdung der Gesundheit in der Umgebung der Heizmatte im wesentlichen ausgeschlossen werden kann. Ferner sollen die sich bisher bewährten Materialien bei der Erstellung von Heizmatten zur Kosteneinsparung weiterhin verwendet werden.

Diese Aufgabe wird mit einer Heizmatte mit den Merkmalen des Anspruchs 16 gelöst. Durch die Vorsehung eines Knotenpunktes, der die Stromzufuhr auf mindestens zwei Heizleitungen verteilt, können die zwei Heizleitungen in einfacher Weise so angeordnet werden, daß sich ihre Magnetfelder in Abhängigkeit von der angelegten Stromquelle vermindern. Diese Verminderung des Magnetfelds führt zu einer Heizmatte, deren Belastung durch elektromagnetische Felder unter den von Baubiologen geforderten Grenzwerten liegt. Dies ist vorteilhaft, da die Heizmatten häufig in Wänden oder Böden eingebaut werden, so daß sie sich in unmittelbarer Nähe von Menschen befinden.

In einer bevorzugten Ausgestaltung der Erfindung ist die Heizmatte an einer Wechselstromquelle angeschlossen und zwei benachbart geführte Heizleitungen werden gegenläufig mit Strom beaufschlagt. Gegenläufig bedeutet in diesem Zusammenhang, daß zwei Heizleitungen von dem Knotenpunkt in entgegengesetzte Richtungen geführt sind, so daß an benachbarten Stellen zweier Stromleiter bei einer Wechselstromquelle ein gewisser Phasenversatz auftritt. Diese Führung zweier benachbarter Stromleiter bewirkt eine nahezu vollständige Eliminierung des Magnetfeldes aufgrund der Induktivität.

Eine besonders große Reduzierung des Magnetfeldes läßt sich erreichen, wenn die zwei gegenläufigen Heizleitungen in einem geringen Abstand geführt sind und einen größeren Abstand zum nächsten Paar von gegenläufigen Heizleitungen haben. Vorzugsweise ist der Abstand zwischen zwei gegenläufigen Heizleitungen kleiner als 2,5 cm, möglichst 1 cm, während der Abstand zwischen zwei Paaren gegenläufiger Heizleitungen größer als 5 cm, vorzugsweise etwa 10 cm ist.

In einer vorteilhaften Ausgestaltung der Erfindung ist eine Heizmatte in eine Heizdecke eingearbeitet.

Die Erfindung wird nachfolgend anhand eines Ausführungsbeispiels unter Bezug auf die beigefügten Zeichnungen näher erläutert. Es zeigen:

Fig. 1  den schematischen Aufbau der erfindungsgemäßen Heizleitung;

Fig. 2  einen Querschnitt durch ein erstes Ausführungsbeispiel der erfindungsgemäßen Heizleitung;

Fig. 3  eine geschnittene Seitenansicht der Heizleitung der Figur 2;

Fig. 4  ein weiteres Ausführungsbeispiel eines erfindungsgemäßen Heizleiters;

Fig. 5  ein Ausführungsbeispiel des erfindungsgemäßen Steckers;

Fig. 6  einen Querschnitt durch einen für eine erfindungsgemäße Heizmatte verwendete Heizleitung;

Fig. 7  eine geschnittene Seitenansicht der Heizleitung der Fig. 6, und

Fig. 8  ein Ausführungsbeispiel einer erfindungsgemäßen Heizmatte.

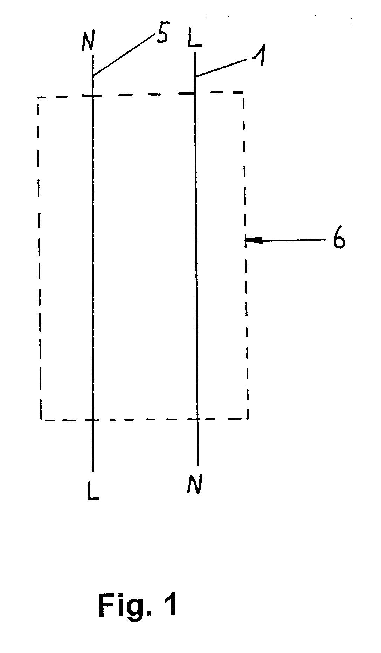

Entsprechend Fig. 1 besitzt eine Heizleitung in einem Bereich 6 einen ersten Heizleiter 1 und einen zweiten Heizleiter 5. Der erste Heizleiter 1 ist an einer ersten in der Figur oberen Seite an die Phase L einer Wechselstromquelle angeschlossen. An der gegenüberliegenden Seite des Bereichs 6 ist der erste Heizleiter 1 mit dem Nulleiter N verbunden. Der zweite Heizleiter 5 ist gegenläufig geführt, wobei an der ersten oberen Seite des Bereichs 6 der Heizleiter 5 mit dem Nulleiter N und an der unteren Seite des Bereichs 6 mit der Phase L verbunden ist. Die beiden Heizleiter 1 und 5 sind dabei an die selbe Wechselstromquelle angeschlossen, so daß sich der Stromfluß in gegenläufiger Richtung einstellt. Durch die Änderung der Spannung wird durch jeden Heizleiter eine magnetische Induktion erzeugt, so daß durch eine Überlagerung der magnetischen Induktion in dem Bereich 6 die Heizleitung ein äußerst niedriges Magnetfeld besitzt.

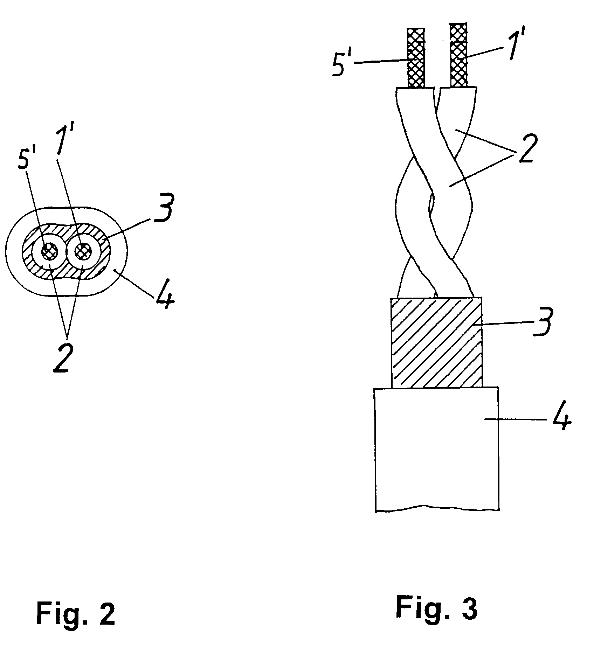

Entsprechend den Fig. 2 und 3 ist ein Ausführungsbeispiel der Heizleitung dargestellt, die einen ersten Heizleiter 1' und einen zweiten Heizleiter 5' aufweist. Die beiden Heizleiter 1' und 5' sind jeweils mit einer Isolierung 2 versehen. Die beiden isolierten Heizleiter 1' und 5' sind miteinander verdrillt, so daß sie durch die Verdrillung zwangsläufig benachbart zueinander geführt sind. Um die verdrillten Heizleiter 1' und 5' ist eine Erdungsleitung (Schutzleiter) 3 angeordnet. Die Erdungsleitung 3 ist aus einer zylinderförmigen Metallschicht gebildet, die um die beiden Heizleiter 1' und 5' mit der Isolierung 2 angeordnet ist. Die Erdungsleitung 3 ist von einem Schutzmantel 4 umgeben, der die Heizleitung vor einer mechanischen Belastung schützt. Der Schutzmantel 4 ist dabei aus Kunststoff gebildet.

Gemäß einem weiteren Ausführungsbeispiel in Fig. 4 einer erfindungsmäßigen Heizleitung ist ein erster Heizleiter 1" spiralförmig und beabstandet von einem zweiten Heizleiter 5" geführt. Die Heizleiter sind dabei als Widerstandsleiter ausgeführt, um die Umgebung des Heizleiters zu erhitzen. Solche Heizleiter werden insbesondere bei Geschirrspülmaschinen und ähnlichen Geräten eingesetzt. Der zweite Heizleiter 5" ist dabei vorzugsweise als Rückleiter isoliert, um eine Berührung mit dem spiralförmigen Heizleiter zu verhindern und somit einen Kurzschluß auszuschließen. Die Isolierung besteht dabei aus kurzen mineralischen Röhrchen, die über den Rückleiter geschoben werden.

In Fig. 5 ist schematisch ein Stecker für einen Stromleiter gezeigt, der auf seiner Eingangsseite an eine gewöhnliche Netzsteckdose anschließbar ist. Auf seiner Eingangsseite sind daher ein Nulleiter-N, eine Erdungsleitungs-E und ein Phaseneingang L vorgesehen. Auf seiner Ausgangsseite weist der Stecker zwei Phasen- L, zwei Nulleiterausgänge N und einen Erdungsleitungsausgang E auf. Für den Einsatz in einem elektrischen Gerät wird auf der Ausgangsseite des Steckers eine Stromleitung an ihrer einen Seite mit dem Nulleiter N und die zweite Stromleitung auf derselben Seite mit der Phase L verbunden.

In einem Elektrogerät ist dadurch ein Bereich entsprechend Fig. 1 vorgesehen, der gegenläufig geführt ist. Beispielsweise ist der Heizleiter 5 in dem oberen Bereich 6 mit dem in Figur 4 ganz links dargestellten Nulleiterausgang verbunden. Auf der anderen Seite des Bereichs 6 ist der Heizleiter 5 mit dem in Figur 4 ganz rechts dargestellten Phasenausgang verbunden. Dementsprechend ist der Heizleiter 1 an der oberen Seite des Bereichs 6 mit dem in Figur 4 links angeordneten Phasenausgang verbunden. Auf der anderen Seite ist der Heizleiter 1 mit dem Nulleiterausgang N verbunden. Dementsprechend ist der Heizleiter 1 an der oberen Leite des Bereichs 6 mit dem in Figur 4 links angeordneten Phasenausgang verbunden. Auf der anderen Seite ist der Heizleiter 1 mit dem Nulleiterausgang N verbunden. Die als Schutzleiter ausgebildete Erdungsleitung ist mit dem Ausgang E verbunden.

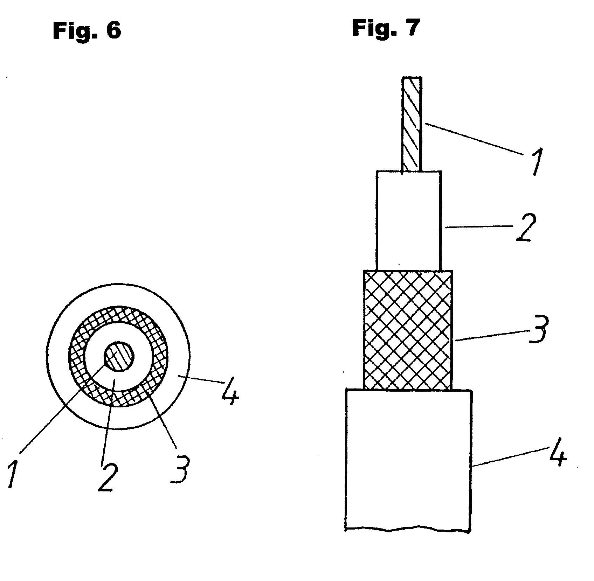

Gemäß den Fig. 6 und 7 wird für die Heizmatte ein Heizleiter 1 verwendet, der aus verdrillten, feinen Drähten besteht. Es ist auch möglich, den Heizleiter als Wendelleiter mit parallel gewickelten Drähten auszugestalten. Um den Heizleiter 1 ist eine Isolierschicht 2 angeordnet, um die wiederum ein Schutzleiter 3 vorgesehen ist. Durch die Isolierschicht 2 besteht kein Kontakt zwischen dem Heizleiter 1 und dem Schutzleiter 3. Der Schutzleiter 3 ist geerdet und bewirkt eine starke Reduzierung des Elektrowechselfeldes. Um den Schutzleiter 3 ist eine weitere Isolierung 4 vorgesehen, die den Heizleiter 1 vor mechanischen Beanspruchungen schützt.

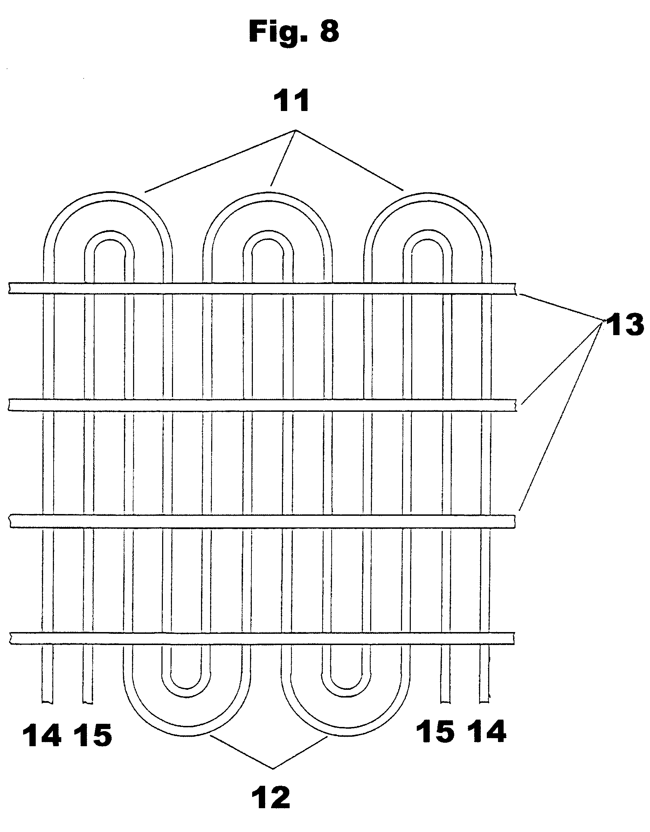

In Fig. 8 ist eine Heizmatte 11 gezeigt, bei dem zwei Heizleitungen 14 und 15 mäanderförmig geführt sind. Dabei sind die beiden Heizleitungen 14 und 15 in einem Bereich parallel geführt, bevor sie in einem gekrümmten Bereich in die entgegengesetzte Richtung parallel geführt werden. Die Heizleitungen 14 und 15 sind dabei in regelmäßigen Abständen angeordnet und werden durch Stege 13 relativ zueinander fixiert. Die Stege 13 bestehen aus Gummi und besitzen Aussparungen, in denen sie die Heizleitungen 14 und 15 aufnehmen. Die in den Stegen 13 aufgenommenen Heizleitungen 14 und 15 werden mit Heftklammern an den Stegen 13 befestigt. In der Fig. 3 sind die Heizleitung 14 auf der linken Seite und die Heizleitung 15 auf der rechten Seite über einen nicht dargestellten Knotenpunkt mit der Phase verbunden. Umgekehrt sind die Heizleitung 15 auf ihrer linken Seite und die Heizleitung 14 auf ihrer rechten Seite mit dem Nulleiter verbunden. Damit sind die beiden Heizleitungen 14 und 15 gegenläufig geführt.

In den Bereichen, in denen die Heizleitungen 14 und 15 parallel nebeneinander geführt sind, reduziert sich das elektromagnetische Feld erheblich. In den Randbereichen 12 lassen sich gewisse erhöhte Bereiche für das Elektromagnetfeld feststellen, da sich dort die Induktivität gegeneinander nicht so stark aufhebt.

Um die Reduzierung des magnetischen Feldes in der Nähe der erfindungsmäßigen Heizleitung und Heizmatte nachzuweisen, wurden verschiedene Heizleitungen mäanderförmig zu einer Matte verbunden, und das Magnetfeld in verschiedene Richtungen in Abhängigkeit von der Entfernung von der Matte vermessen. Die Messungen wurden dabei über eine Dauer von mindestens 30 Sekunden durchgeführt, um den Mittelwert für die Messung zu verwenden. Bei den Versuchsreihen wurden drei unterschiedliche Typen von Heizmatten untersucht:

Typ 1: Heizmattel: 2 Heizleitungen verdrillt, Messungen b und c
Heizleitungstyp: NH4GMY6800 Ohm/km
Heizmattengröße: 120 cm x 210 cm
spezifische Leistung: 10,9 W/m Heizleitung = 21.8 W/m
Leistung gesamt: 581 W

Typ 2: Heizmatte 2: eine Heizleitung einzeln verlegt, Messung d
Heizleitungstyp: (N)H4GQU3GW 2280 Ohm/km
Heizmattengröße: 110 cm x 260 cm
spezifische Leistung: 13,63 W/m
Leistung gesamt: 562 W

Typ 3: Heizmatte 3: 2 Heizleitungen parallel verlegt, Abstand 2,5 cm, Messungen e und f
Heizleitungstyp: NH2GMY 18000 Ohm/km
Heizmattengröße: 140 cm x 120 cm
spezifische Leistung: 27,6 W/m
Leistung gesamt: 569 W

Die Heizmatte vom Typ 2 entspricht der konventionellen Bauweise, bei der eine einzelne Heizleitung mäanderförmig verlegt ist. Bei den Heizmatten vom Typ 1 und 3 sind die Heizleitungen bifilar verlegt, wobei die Heizleitungen der Heizmatte 1 miteinander verdrillt sind, während die Heizleitungen der Heizmatte 3 parallel mit einem Abstand von 2,5 cm mäanderförmig geführt sind. Die Heizmatten sind alle mit einer Isolierung versehen.

Die Messungen wurden mit Hilfe des digitalen Feldstärkemeßgeräts, Modell EMS-10 durchgeführt. Das Gerät kann elektrische und magnetische Wechselfelder im Frequenzbereich von 10 Hz bis 100 kHz mit hoher Genauigkeit nach Richtung und Feldstärke messen.

Da der Sensor richtungsbezogen mißt, wurden die Messungen der Elektromagnetfelder in drei Achsen durchgeführt. Bei der Messung 1 wurde der Sensor hochkant stehend quer zur Längsachse der rechteckförmigen Heizmatte plaziert. Bei der Messung 2 wurde der Sensor hochkant stehend in Längsrichtung der rechteckförmigen Heizmatte positionsiert. Bei der Messung 3 wurde der Sensor flach auf die Mittelachse gelegt. Die erhaltenen Meßwerte hinsichtlich der Elektromagnetfelder sind in den beigefügten Tabellen in der Einheit nT (nanoTesla = 1/1000 μT) dargestellt.

Legende: a Abstand der Feldsonde in cm vom Boden
b Heizleiter verdrillt, über Heizleiter
c Heizleiter verdrillt, Mitte zwischen Heizleitern
d Heizmatte einfache Verlegung
e Heizleiter parallel, über Heizleiter
f Heizleiter parallel, zwischen Heizleitern

**Messung 1**

| a | b | c | d | e | f |
|---|---|---|---|---|---|
| 60 cm | 6 | 6 | 313 | 20 | 23 |
| 50 cm | 9 | 8 | 399 | 28 | 32 |
| 45 cm | 13 | 10 | 454 | 32 | 38 |
| 40 cm | 13 | 11 | 520 | 37 | 42 |
| 35 cm | 14 | 13 | 602 | 45 | 50 |
| 30 cm | 17 | 13 | 684 | 52 | 57 |
| 25 cm | 16 | 12 | 780 | 57 | 67 |
| 20 cm | 17 | 10 | 847 | 60 | 74 |
| 15 cm | 20 | 9 | 931 | 53 | 73 |
| 10 cm | 15 | 9 | 1963 | 58 | 40 |
| 5 cm | 383 | 27 | 11430 | 1072 | 252 |

**Messung 2**

| a | b | c | d | e | f |
|---|---|---|---|---|---|
| 60 cm | 12 | 18 | 359 | 23 | 26 |
| 50 cm | 7 | 10 | 463 | 28 | 36 |
| 45 cm | 13 | 11 | 530 | 34 | 38 |
| 40 cm | 10 | 15 | 617 | 35 | 45 |
| 35 cm | 7 | 21 | 720 | 39 | 49 |
| 30 cm | 6 | 13 | 839 | 44 | 52 |
| 25 cm | 10 | 24 | 998 | 51 | 57 |
| 20 cm | 18 | 38 | 1147 | 55 | 62 |
| 15 cm | 33 | 57 | 1288 | 52 | 60 |
| 10 cm | 15 | 73 | 1406 | 62 | 52 |
| 5 cm | 318 | 39 | 1787 | 83 | 69 |

**Messung 3**

| a | b | c | d | e | f |
|---|---|---|---|---|---|
| 60 cm | 66 | 30 | 560 | 123 | 62 |
| 50 cm | 63 | 43 | 668 | 83 | 55 |
| 45 cm | 126 | 26 | 728 | 135 | 62 |
| 40 cm | 83 | 23 | 809 | 104 | 71 |
| 35 cm | 56 | 51 | 865 | 69 | 77 |
| 30 cm | 58 | 25 | 933 | 82 | 79 |
| 25 cm | 45 | 100 | 998 | 95 | 97 |
| 20 cm | 57 | 47 | 1058 | 98 | 92 |
| 15 cm | 62 | 26 | 1117 | 108 | 90 |
| 10 cm | 25 | 135 | 1223 | 138 | 86 |
| 5 cm | 36 | 105 | 2040 | 177 | 76 |

Wie aus den Messungen 1 bis 3 deutlich hervorgeht, ist das Elektromagnetfeld der Heizmatte 2 entsprechend der Spalte d deutlich größer als bei den erfindungsmäßigen Heizmatten (Messungen b, c, e und f) insbesondere im Nahbereich der Heizmatte, also bei einem Abstand der Feldsonde von etwa 5 cm vom Boden unterscheidet sich die herkömmliche Heizmatte, bei der ein einzelner Leiter mäanderförmig geführt ist, klar von einer erfindungsgemäßen Heizmatte.

**Patentansprüche**

1. Heizleitung mit stromführenden Leitungen **dadurch gekennzeichnet, daß** die Heizleitung in einem Bereich zwei benachbart geführte Heizleiter (1, 1', 5, 5') aufweist, die, wenn sie an eine Wechselstromquelle angeschlossen sind, an benachbarten Stellen phasenversetzt durchströmt sind.

2. Heizleitung nach Anspruch 1, **dadurch gekennzeichnet, daß** ein erster Heizleiter (1, 1') an der ersten Seite des Bereichs (6) an die Phase (L) und an der zweiten Seite des Bereichs (6) an den Nullleiter (N) angeschlossen ist und ein zweiter benachbarter Heizleiter (5, 5') an der ersten Seite des Bereichs (6) an den Nulleiter (N) und an der zweiten Seite des Bereichs (6) an die Phase (L) angeschlossen ist.

3. Heizleitung nach Anspruch 1 oder 2, dadurch gekennzeichnet, daß die Heizleiter (1, 1', 5, 5') mit einer Isolierung (2) versehen sind.

4. Heizleitung nach Anspruch 3 oder 4, **dadurch gekennzeichnet, daß** die isolierten Heizleiter (1, 1', 5, 5') parallel geführt oder miteinander verdrillt sind.

5. Heizleitung nach mindestens einem der vorhergehenden Ansprüche, **dadurch gekennzeichnet, daß** an den Heizleitern (1, 1', 5, 5') eine Erdungsleitung (3) geführt ist.

6. Heizleitung nach Anspruch 6, **dadurch gekennzeichnet, daß** die Erdungsleitung (3) aus einer zylinderförmigen Metallschicht gebildet ist, die um die zwei Heizleiter (1, 1', 5, 5') mit der Isolierung (2) angeordnet ist.

7. Heizleitung nach Anspruch 6 oder 7, **dadurch gekennzeichnet, daß** um die Heizleiter (1, 1', 5, 5') und die Erdungsleitung (3) ein Schutzmantel (4) angeordnet ist.

8. Heizleitung nach mindestens einem der vorhergehenden Ansprüchen, **dadurch gekennzeichnet, daß** die Heizleiter als Widerstandsleiter ohne Isolierung ausgeführt sind, die durch geeignete Vorrichtungen auf Abstand gehalten werden.

9. Heizleitung nach mindestens einem der vorhergehenden Ansprüche, **dadurch gekennzeichnet, daß** die Heizleiter als Widerstandsdrähte, -stäbe, -bänder oder -folien, die mit einer Isolierung versehen sind, ausgeführt sind.

10. Heizleitung nach mindestens einem der vorhergehenden Ansprüche, **dadurch gekennzeichnet, daß** ein erster Heizleiter (1") spiralförmig und beabstandet um einen zweiten Heizleiter (5") geführt ist.

11. Stecker für einen Stromleiter, **dadurch gekennzeichnet, daß** der Stecker mit einem Stromleiter nach einem der vorhergehenden Ansprüche verbindbar ist und jeweils mindestens zwei Anschlüsse für die Phase (L) und den Nulleiter (N) aufweist.

12. Stecker nach Anspruch 12, **dadurch gekennzeichnet, daß** der Stecker einen Anschluß für eine Erdungsleitung (E) aufweist.

13. Stecker nach Anspruch 12 oder 13, **dadurch gekennzeichnet, daß** der Stecker einen Phasen-(L), einen Nulleiter (N) und einen Erdungsleitungseingang (E) aufweist.

14. Stecker nach einem der Ansprüche 12 bis 14, **dadurch gekennzeichnet, daß** der Stecker zwei Phasen-(L) zwei Nulleiterausgänge (N) und einen Erdungsleitungsausgang (E) aufweist.

15. Elektrogerät, **dadurch gekennzeichnet, daß** das Elektrogerät mit einer Heizleitung nach einem der Ansprüche 1 bis 11 versehen ist.

16. Heizmatte (11), insbesondere zum Beheizen von Flächen, mit einer sich erwärmenden Heizleitung (1) und einem Knotenpunkt, dadurch gekennzeichnet, daß an dem Knotenpunkt die Stromzufuhr auf mindestens zwei sich erwärmende Heizleitungen (1) aufgeteilt ist, die paarweise in der Heizmatte (11) geführt sind, sodaß sich ihre Magnetfelder zumindest teilweise gegenseitig abschwächen.

17. Heizmatte nach Anspruch 16, **dadurch gekennzeichnet, daß** das Heizelement (11) an einer Wechselstromquelle angeschlossen ist und zwei Stromleiter (1) bereitsweise gegenläufig und benachbart zueinander geführt sind.

18. Heizmatte nach Anspruch 17, **dadurch gekennzeichnet, daß** zwei Heizleitungen (1) mäanderförmig geführt sind, wobei in den geraden Bereichen die zwei benachbarten paarweisen Heizleitungen (1) gegenläufig mit Strom beaufschlagt sind.

19. Heizmatte nach Anspruch 17 oder 18, **dadurch gekennzeichnet, daß** die Heizleitungen (1) in regelmäßigen Abständen zueinander angeordnet sind.

20. Heizmatte nach Anspruch 17 oder 18, **dadurch gekennzeichnet, daß** jeweils zwei gegenläufige Heizleitungen (1) in einem geringeren Abstand als zwei Paare von benachbart gelegenen gegenläufigen Heizleitungen (1) geführt sind.

21. Heizmatte nach Anspruch 20, **dadurch gekennzeichnet, daß** der Abstand zwischen zwei gegenläufigen Heizleitungen (1) kleiner als 2,5 cm und der Abstand zwischen zwei Paaren gegenläufiger Heizleitungen (1) größer als 5 cm ist.

22. Heizmatte nach Anspruch 20 oder 21, **dadurch gekennzeichnet, daß** zwei gegenläufige Heizleitungen (1) miteinander verdrillt sind.

23. Heizmatte nach einem der vorhergehenden Ansprüche, **dadurch gekennzeichnet, daß** die Heizleitungen (1) durch Stege (13) relativ zueinander fixiert sind.

**Fig. 1**

Fig. 2

Fig. 3

**Fig. 4**

**Fig. 5**

**Fig. 6**

**Fig. 7**

# Fig. 8

**11**

**13**

**14 15**

**15 14**

**12**